## Europäisches Patentamt
## European Patent Office
## Office européen des brevets

(19)

(11) Publication number: **0 049 725**
**A1**

(12)

# EUROPEAN PATENT APPLICATION

(21) Application number: **80850150.6**

(22) Date of filing: **13.10.80**

(51) Int. Cl.³: **F 16 B 5/06**

(43) Date of publication of application:
**21.04.82 Bulletin 82 16**

(84) Designated Contracting States:
**AT BE CH DE FR GB IT LI NL**

(71) Applicant: **Ohlson, Kurt Lennart**
**Vendelsö skolväg 104**
**S-136 71 Handen(SE)**

(72) Inventor: **Ohlson, Kurt Lennart**
**Vendelsö skolväg 104**
**S-136 71 Handen(SE)**

(74) Representative: **Lindblom, Erik J**
**Caroline Östbergs väg 5**
**S-122 35 Enskede(SE)**

(54) **A holding device.**

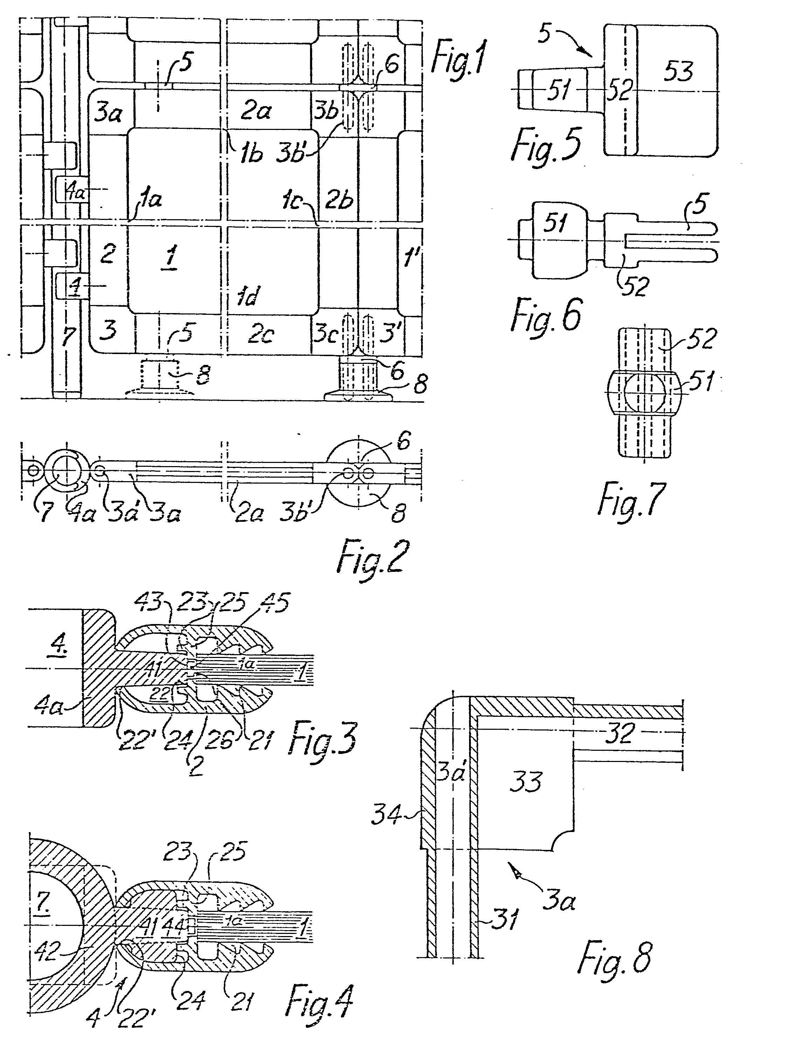

(57) A holding means (4) intended to hold a plate-like element (1) to a post (7). The holding means (4) is provided with a peg (41) having different cross-sections (43, 44) formed at two perpendicular coordinates. In a first position of rotation (Figure 3) of the means (4) relative to the first element (2), the peg (41) can be inserted into said element (2), and upon further rotation of the means (Figure 4) to a second position of rotation, the larger cross-section (44) of said peg (41) will clamp the holding means firmly against surfaces (23, 24) formed in said first element (2).

Fig.3

Fig.4

EP 0 049 725 A1

1

# A HOLDING DEVICE

## TECHNICAL FIELD

The present invention relates to a holding device, and particularly to a holding device which is intended to hold a first element, for example in form of a plate or like element, to a second element, for example in the form of a post, a rail or the like. To this end, the holding means is provided with first means for co-action with the first element and is provided with second means for co-action with the second element.

## BACKGROUND ART

Various holding devices of the aforementioned kind are previously known to the art, in which said holding device is so constructed as to be fastened to a rail by rotating said device through an angle of 90°.

Other kinds of holding devices which are particularly constructed to co-act with, for example, a rail of particular design are also known to the art.

## SUMMARY OF THE INVENTION

### PROBLEMS

Previously known holding devices of the kind envisaged are encumbered with serious problems, particularly when said holding device is constructed so as to be effective when rotated, and when rotated expands and presses against a rail, for example, since it has been found that the resultant expansion force is of such magnitude that said rail, especially if it is made of aluminium, yields to the internal pressure.

Consequently, a desire within the art is to construct such a holding device and such a rail in a manner so that there is obtained a fixed connection with each other, without distorting the rail.

It has also been found problematic to produce a holding device of simple construction, and above all to produce such a device from plastic elements which can be manufactured by moulding techniques.

SOLUTION

An object of the present invention is to provide a solution to the aforementioned problems , to which end it is proposed that the first means comprises a peg having differing cross sections formed in two perpendicular coordinates. In a first rotary position of said device relative said first element , the peg can be moved into said element and upon rotation of said device to a second position of rotation, the larger cross section of said peg will clamp the device against said first element. This is effected by providing said first element with a recess so shaped that the inner cavity is greater than its slot. By providing the inner wall part of said recess with parallel wall surfaces, the possibility is given of permitting the larger cross section of said peg to be clamped firmly against said parallel wall surfaces, and since said parallel wall surfaces are located centrally of and adjacent an intermediate wall of said rail the aforementioned disadvantages are eliminated.

In one plane the peg has a thickness which corresponds to the width of the slots, and in a perpendicular plane a configuration which corresponds to said recess.

By arranging in the inner wall part a plurality of apertures, which serve as positioning means for said device, it is possible , in a simple manner, to position the device along said edge part in an exactly defined manner, which must be considered as an important advantage.

ADVANTAGES

The most important advantages afforded by a holding means in accordance with the present invention is the simplicity of manufacture and construction of said means, together with the possibility afforded by the fact that the holding means can be brought into co-action with a rail with the aid of a tensioning force without the rail expanding and without any change in the cross-sectional shape of said rail due to said expansion force.

The main characterizing features of a holding means in accordance with the present invention are set forth in the characterizing clauses of the following claims.

A BRIEF DESCRIPTION OF THE DRAWINGS

A preferred embodiment of the present invention illustrating the important characteristic features thereof will now be described with reference to the accompanying drawing in which,

Figure 1 illustrates in plan view a plate-like element fastened to a post, and also fastened to a plurality of adjacent plate-like elements,

Figure 2 is a horizontal view of the array shown in Figure 1,

Figure 3 illustrates a holding device located between said plate-
like element and said post in a first position of rotation,

Figure 4 illustrates said holding device between said plate-like
element and said post in a second position of rotation,

Figure 5 is a first side view of a holding device intended to
hold together two mutually adjacent sides of two adjacent
plates,

Figure 6 is another side view of a holding means according to
Figure 5,

Figure 7 illustrates the holding means shown in Figure 5 in front-
view,

Figure 8 is a sectional side view of a corner detail for said plate,

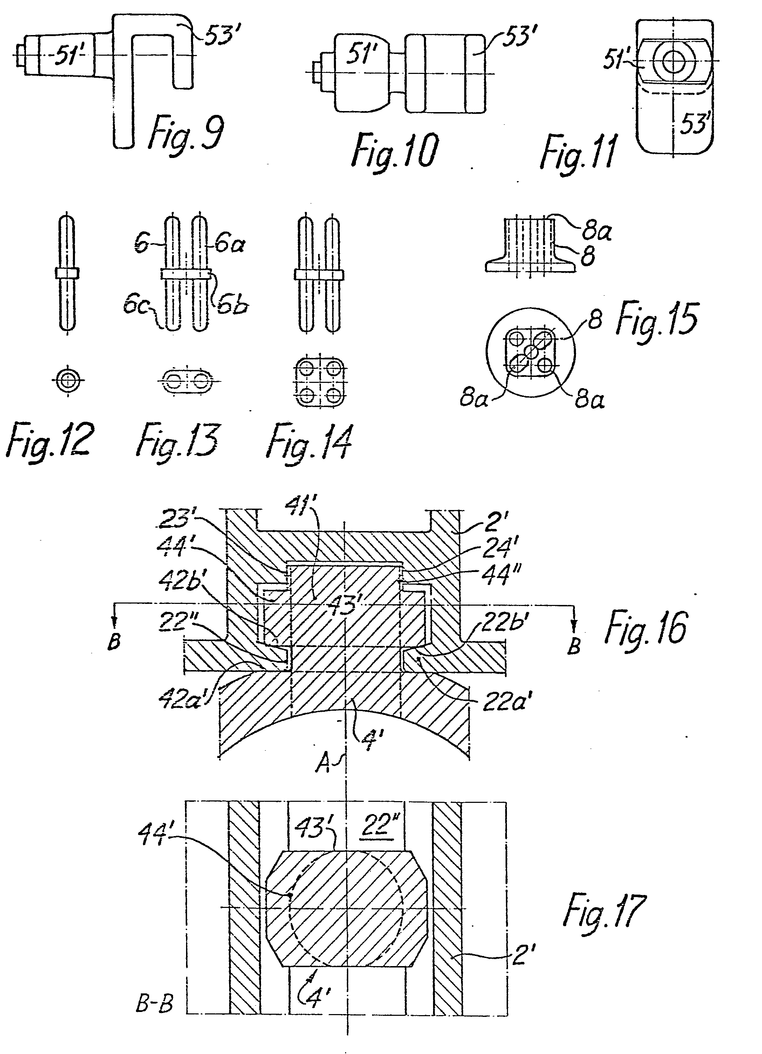

Figure 9 illustrates in a first side view an alternative holding
means arranged to co-act with a post or rail,

Figure 10 illustrates in a second side view a holding means according to Figure 9,

Figure 11 illustrates the holding means shown in Figure 9 in
front view,

Figure 12 illustrates, in two projections, a first connecting element for said corner details,

Figure 13 illustrates, in two projections, a second connecting element for said corner details,

Figure 14 illustrates, in two projections, a third connecting
element, for said corner details,

Figure 15 illustrates, in two projections, a foot part arranged
to accommodate one or more connecting elements , and

Figures 16 and 17 illustrate an alternative holding means.


DETAILED DESCRIPTION OF A PREFERRED EMBODIMENT

In Figure 1 there is illustrated in plan view a plate-like element which is connected to a post and also connected to a plurality of mutually adjacent plate-like elements.

The plate-like element comprises a plate 1 and respective edge portions of said plate are provided with an edge strip and two corner elements or details. Thus, the edge part 1a of said plate is provided with or co-acts with an edge strip 2 and two corner elements 3 and 3a. The edge part 1b co-acts with an edge strip 2a and two corner elements 3a and 3b. Similarly, the edge part 1c co-acts with an edge strip 2b and the corner elements 3b and 3c, while the edge part 1d co-acts with an edge strip 2c and corner elements 3c and 3.

The edge parts 2, 2a, 2b and 2c are identical and are formed from one and the same profiled element, preferably an aluminium profiled element. In the Figure 1 embodiment, the edge strip 2 co-acts with two holding means 4, 4a, the design of which will be described hereinafter with reference to Figures 3 and 4. The edge strip 2a is arranged to co-act with a holding means 5 arranged to guide two plate-like elements arranged side-by-side and over each other. A similar holding means 5 is arranged to co-act with the edge strip 2c, but is here intended to receive a base or foot part 8.

The corner elements 3, 3a, 3b and 3c are identical, and will be described in more detail hereinafter with reference to Figure 8.

It can be mensioned here , that each corner element is provided with a hole. It will be seen from Figure 1 , that co-operating with the corner element 3b and the hole or orifice 3b' arranged therein is a connecting element 6, the construction of which will be described in more detail with reference to Figure 13.

As will be seen from Figure 1, the left edge portion 1a of the plate 1 also co-acts, via said holding means 4, with a post 7 of circular cross sectional shape, while the edge strip 2a co-acts , via a holding means 5, with a plate-like unit of similar construction, and that the edge strip 2b co-acts in tight relationship with a laterally arranged further plate-like unit.
The corner element 3c of the plate 1 is positioned immediately adjacent the corner element 3′ of the plate 1′, and a connecting element 6 holds together the said two corner elements. The connecting element 6 is arranged also to co-act with a foot part 8, which will be more closely described hereinafter with reference to Figure 15.

Figure 2 illustrates the array shown in Figure 1 in a horizontal view and in section taken immediately above the plate-like element 1 with the holding means 5 removed.

Since the holding means 4 and 4a are identical, only the holding means 4 will be described.

The edge strip comprises a metal profile having a first recess 21 for receiving the edge part 1a of the plate 1.

The edge strip also exhibits a second recess 22 intended to accommodate the holding means 4. However, said second recess 22 is not only intended to receive and hold said holding means 4, but also to hold the connecting element 5 and other like elements.

The holding means 4 is also arranged to secure a first element, for example in the form of a plate 1 or the like, to a second element, for example in the form of a post 7. As will be understood, the post 7 can be replaced by a rail or like element.

As previously mentioned, the holding means 4 is intended to hold a first element, for example having the form of a plate 1 or like element, to a second element, for example having the form of a post 7. The post can, of course, be replaced by a rail or like element.

The holding means 4 is provided with first means 41 for co-action with said first element, i.e. the plate-like unit 1, via the strip 2, and is also provided with second means 42 for co-action with said second element or post 7. The first element 41 comprises a peg having mutually different cross sections formed by two perpendicular coordinates. The one cross-section has been referenced 43 in Figure 3 , while the other cross-section oriented perpendicularly to said first cross-section has been referenced 44 in Figure 4. It will be seen from these two projections that when the holding means 4 is rotated to a first position, namely the position shown in Figure 3, and when said position of rotation is related to the plate 1 or to said first element, said peg 41 can be moved into the second recess 22 of the edge strip 2. When the means 4 is rotated to a second position of rotation, namely the position shown in Figure 4, the second, larger cross-section 44 of said peg will clamp the means 4 firmly against the first element 2. This is effected by the fact that the second recess 22 of the edge strip 2 is provided with two internal surfaces 23 and 24 dimensioned to absorb the forces created by said means.

The edge strip 2 is provided with said recess 22 exhibiting an inner cavity greater than its slot 22'. Located in the inner wall part 25 of the recess 22 are parallel force-absorbing wall surfaces 23 and 24, against which the larger cross-section 44 of said peg is tensioned.

It will be seen from Figure 3 that in one plane the peg 41 has a thickness which corresponds to the width of the slot 22', while in another plane , taken perpendicularly to the plane in Figure 3 , and which is illustrated in Figure 4, the peg 41 is provided with a configuration corresponding to that of said recess or said cavity 22.

The central or inner wall part 25 of the edge strip is provided with a plurality of mutually spaced holes 26. These holes serve as positioning means for the holding means 4.

By ensuring that a part 45 of the peg 41 must be inserted in the hole 26 in order to ensure a holding action of the means 4, it is possible to obtain an exact orientation of the position of said holding means 4 along the edge strip 2. By allowing the distance from one corner element 3 to the nearest fixing means 4 to be different from the distance from the next corner element 3a to its nearest positioning means 4a, there is obtained the advantage whereby the plate 1 can take different positions and be rotated without the holding means of one plate being located opposite the holding means of an adjacent plate. In addition, by allowing said distance to be mutually different between adjacent plates, there is afforded the further possibility of mounting the plate 1 in an arbitrary position relative to a post.

Figure 5 illustrates a first side view of a holding means 5 intended to hold together the sides of laterally oriented plates. The holding means 5 also exhibits a peg 51 identical with the previously described peg 41, and it will be understood that said peg 51 is able to co-act with the recess 22 in the edge strip 2. Mounted to the peg 51 is a spacer 52 and a holder means 53 arranged to co-operate with an adjacent plate. The holder means 53 is intended to be inserted into the cavity 22 of an edge strip intended for an adjacently located plate.

Figure 6 illustrates a second side view of the holding means shown in Figure 5, while in Figure 7 the holding means of Figure 5 is shown in front view.

Figure 8 illustrates in side view and in section a corner element intended for said plate. It should be noted that all corner elements 3, 3a, 3b and 3c are identical, and hence only the corner element 3a will be described, with reference to Figure 8.

As previously mentioned, the edge strips 2 and 2a comprise metal profiles and are provided with a recess 21 for receiving an edge surface 1a of said plate , and a second recess 22 for receiving the holding means 4 and 5. The corner element 3a is provided with a peg 41 arranged to co-act with said second recess 22 in the edge strip 2. Said second recess 22 is separated from said first recess 21 for accommodating said plate by means of a partition 25. Similarly, the corner element 3a is provided with a peg 32 arranged to co-act with an edge part 2a associated with said second recess 22.

It will also be seen from Figure 8 that the corner element 3a is provided with a hole 3a′, which is arranged to co-act with different connecting elements. Figure 8 also illustrates that the corner element is provided with mutually spaced apart wall parts 33, where one wall part 33 is intended to abut one edge surface of the plate 1, while the other wall part is intended to abut the opposite surface of said plate. In this way, there is obtained good clamping and anchoring of the corner part of said plate 1.

Figure 9 illustrates a first side view of an alternative embodiment of a holding means, intended to hold or clamp a plate-like element and to co-act with a post, a rail or like structural element in the manner previously described. To this end, said holding means exhibits a peg 51 which is identical with the peg of the Figure 5-7 embodiments. The peg 51' has a hook 53'which is particularly intended to enclose a rail, the end of a pipe or like element. Figures 10 and 11 are two further projectional views of this holding means.

Figure 12 illustrates in two projectional views a first connecting element for said corner elements, while Figure 13 illustrates in two projectional views a further connecting element 6 for said corner elements. Figure 14 illustrates, in two projectional views , a third connecting element for said corner elements. These connecting elements (according to  Figure 13) comprise two upper pegs 6a and a plate 6b and two lower pegs 6c. Figure 1 illustrates the connecting element shown in Figure 13 in one mode of application. It should be noticed here that the connecting elements shown in Figures 12-14 could well be  designed in a manner such as to lack the lower pegs 6c, whereat further connecting elements are obtained.

Finally, Figure 15 illustrates in two projectional views a foot- part 8 having holes 8a intended to receive one or more connecting elements of the kind shown in Figures 12-14, and also intended to co-act with a corner element.

With respect to connecting elements shown in Figures 13 and 14 it should be observed that when corner elements such as those shown in Figure 8 co-act with pegs 6a, or pegs 6c of said elements, said corner elements may be guided relative to one another by providing the surface 34 with teeth arranged to co-act with corresponding teeth in one surface of an adjacent element.

Rotation of one element relative to said peg will cause a corresponding rotation of all elements.

Figures 16 and 17 illustrate an alternative embodiment of a holding means according to the invention, in which the clamping forces act partly perpendicularly and partly parallel to the axis of rotation "A". Also in this embodiment of the invention the holding means is intended to hold a first element, for example in the form of a plate or like element, to a second element, for example in the form of a post 7, a rail or like element. The holding means is provided with a first member for co-action with said first element and also provided with a second member for co-action with said second element, in which said first member) comprises a peg 41' having different cross sections 43', 44' formed by two perpendicular coordinates , so that at a first position of rotation of the means 4' relative to the first element 2', said peg can be moved into said element 2', and upon rotation of said means to a second position of rotation, said peg will clamp firmly the means 4' against the first element 2'. The clamping force required in order to hold the elements together is directed parallel to or substantially parallel to the axis of rotation A.

A first surface 42a' formed perpendicular to the axis of rotation, and a second surface 42b' formed at a second angle perpendicular to said first surface 42a' , of the means 4', is arranged in the second position of rotation, illustrated in Figures 16 and 17, to exert mutually oppositly directed clamping forces on respective sides of a projection 22a' formed on the element 2'.

The projection 22a' has an oblique surface 22b', while said means is provided with a straight surface 42b' extending at right angles to said axis of rotation A, or vice versa, whereby there is obtained a "snap action" when the means 4' adopts its second position of rotation.

In the inner wall part of the recess , remote from the slot 22" , there are found wall surfaces 23' and 24' which lie parallel relative to said axis of rotation A and against which the large cross-section 44" of the peg 44' are urged with a force directed at right angles to said axis of rotation A.

As will be understood , the invention is not limited to the aforedescribed exemplary embodiments, but can be modified within the scope of the following claims.

In order to comprise the maximum concentrated force parallel to the axis of rotation, the angular value of the surface 22b' should be less than $45^{\circ}$ , and preferably below $25^{\circ}$. Preferably said angle is from $5^{\circ}$ to $15^{\circ}$.

CLAIMS:-

1. A holding means arranged to hold a first element, for example a plate (1) or like element, to a second element, for example a post (7), a rail or like element, provided with a first means for co-acting with said first element and provided with a second means for co-acting with said second element, characterized in that said first member .comprises a peg (41) having different cross-sections (43, 44) formed in two perpendicular coordinates, that in a first position of rotation (Figure 3) of said means relative to said first element, said peg is able to enter said first element, while upon rotation of said means to a second position of rotation (Figure 4) said larger cross-section of said peg clamps said means firmly against said first element (23,24).

2. A holding means according to claim 1, characterized in that said first element is provided with a recess having an inner cavity greater than its slot, and in that in the inner wall part of said recess there are parallel wall surfaces (23,24) against which the larger cross-section of said peg (44) is clamped.

3. A holding means according to claim 1, characterized in that said peg has in one plane a thickness corresponding to the width of said slot, while in a plane perpendicular to the first mentioned plane has a shape corresponding to said recess.

4. A holding means according to claim 2, characterized in that said inner wall part is provided with a plurality of holes (26) which serve as a positioning means.

5. A holding means according to claim 1, characterized in that said first element has the form of a plate with a first recess provided with hooks for a further plate, and a second recess, in which the two recesses are separated by a partition wall (25).

6. A holding means according to claim 5, characterized in that the clamping force is concentrated on said intermediate wall (25).

7. A holding means (4′) intended to hold a first element, for example in the form of a plate (1) or like element, to a second element , for example in the form of a post (7), a rail or like element, provided with a first member for co-action with said first element and provided with a second member for co-action with said second element, in which the first member comprises a peg (41′) having different cross-sections (43′,44′) formed in two mutually perpendicular coordinates, so that upon a first position of rotation of said means (4′) relative to said first element (2′), said peg can be inserted into said member (2′) and upon rotation of said means to a second position of rotation said peg will clamp said means (4′) against said first element (2′), characterized in that the clamping force required to clamp said elements together is directed parallel to or substantially parallel to said axis of rotation (A).

8. A holding means according to claim 7, characterized in that a first surface (42a′) formed at right angles to said axis of rotation and a second surface (42b′) formed at right angles to said first mentioned right angle in the means (4′) are arranged to exert in said second position of rotation (Figures 16 and 17) a mutually oppositly directed clamping force on a respective side of a projection (22a′) formed in said element (2′).

9. A holding means according to claim 6 or claim 7, characterized in that said projection (22a') is provided with an oblique surface (22b') and said means is provided with a straight surface (42b') directed perpendicularly to the axis of rotation (A), or vice versa, whereby there is obtained a "snap action" when said means (4') adopts its second position of rotation.

10. A holding means (4'), intended to hold a first element, for example an element in the form of a plate (1) or the like, to a second element, for example a post (7) , a rail or the like, provided with a first member for co-action with said first element and also provided with a second member for co-action with said second element, where said first member comprises a peg (41') having different cross sections (43' ,44') formed in two perpendicular coordinates, so that when said means (4') is rotated to a first position of rotation relative to said first element (2') the peg is able to enter said element (2') and when said means is rotated to a second position of rotation said peg will clamp said means (4') to said first element (2'), characterized in that the clamping force required to hold said elements together is directed parallel to or substantially parallel to said axis of rotation (A), and in that in the wall part of said recess remote from said slot are found wall surfaces (23',24') parallel relative to said axis of rotation (A) , against which wall surfaces the large cross-section (44") of said peg (44') shall clamp with a force acting perpendicularly to the axis of rotation (A).

1/2

0049725

Fig.1

Fig.2

Fig.3

Fig.4

Fig.5

Fig.6

Fig.7

Fig.8

0049725

Fig.9

Fig.10

Fig.11

Fig.12    Fig.13    Fig.14

Fig.15

Fig.16

Fig.17